# EUROPÄISCHE PATENTSCHRIFT

(11) **EP 1 370 350 B1**
(45) Veröffentlichungstag und Bekanntmachung des Hinweises auf die Patenterteilung: **07.07.2010**
(21) Anmeldenummer: 02714045.8
(22) Anmeldetag: 20.02.2002
(51) Int. Cl.: B01J 8/00, F28F 27/02, H01M 8/24, C01B 3/00, B01J 19/00

(54) **REAKTOR MIT GLEICHMÄSSIGER VERTEILUNG VON BETRIEBSMITTELN**
REACTOR HAVING A UNIFORM DISTRIBUTION OF OPERATING MATERIALS
REACTEUR A REPARTITION UNIFORME DES MOYENS DE FONCTIONNEMENT

(30) Priorität: 12.03.2001 DE 10112074
(43) Veröffentlichungstag der Anmeldung: 17.12.2003
(73) Patentinhaber: Forschungszentrum Jülich GmbH, 52425 Jülich (DE)
(72) Erfinder: BEWER, Thomas, 52074 Aachen (DE); BECKMANN, Thomas, 45470 Mülheim/Ruhr (DE); DOHLE, Hendrik, 52224 Stolberg-Mausbach (DE); MERGEL, Jürgen, 52428 Jülich (DE); STOLTEN, Detlef, 52076 Aachen (DE); STALLING, Jan, 26655 Westerstede (DE); PETERS, Ralf, 52080 Aachen (DE)
(86) Internationale Anmeldenummer: PCT/DE2002/000617
(87) Internationale Veröffentlichungsnummer: WO 2002/072252

(56) Entgegenhaltungen:
- EP-A- 0 998 973
- EP-A- 1 038 575
- US-A- 2 934 322
- US-A- 6 099 983

## Beschreibung

Die Erfindung betrifft die Zuführung von Betriebsmitteln in chemische oder elektrochemische Reaktoren, insbesondere Brennstoffzellen und den Reaktoren und Wärmetauschern der Brenngaserzeugung für die mobile Anwendung der Brennstoffzelle.

Chemische und elektrochemische Reaktoren dienen dazu, Reaktionsedukte einer Reaktionszone zuzuführen, chemische oder elektrochemische Reaktionen durchzuführen und Reaktionsprodukte aus der Reaktionszone abzuleiten. Energie kann dabei zugeführt oder auch freigesetzt werden. Als Energiearten können sowohl thermische Energie als auch elektrische Energie zum Einsatz kommen.

Im Falle einer Brennstoffzelle wird elektrische Energie direkt aus einem Brennstoff und einem Oxidationsmittel gewonnen. Sie weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, so beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur bis zu 1000 °C beträgt. An der Kathode einer Hochtemperaturbrennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Die Betriebstemperatur einer PEM-Brennstoffzelle liegt bei ca. 80°C. An der Anode einer PEM-Brennstoffzelle bilden sich in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt.
Als Brennstoff kann unter anderem auch Methan oder Methanol vorgesehen werden. Die genannten Brennstoffe werden dann durch Reformierung in Wasserstoff bzw. wasserstoffreiches Gas umgewandelt.

Mehrere Brennstoffzellen werden in der Regel zur Erzielung großer elektrischer Leistungen durch verbindende Elemente elektrisch und mechanisch miteinander verbunden. Ein Beispiel für ein solches verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt.

Aus der Druckschrift DE 197 34 729 C1 ist bekannt, ein Betriebsmittel über Kanäle schräg an schlitzförmige Aussparungen eines Zuführungsbauteils heranzuführen und es anschließend über schlitzförmige Gasverteilerstrukturen einer modular aufgebauten bipolaren Platte in einen Elektrodenraum einzuleiten.

Aus Ogiwara, et al. (Ogiwara, T., Yakabe, H., Hishinuma, M., Yasuda I., 2000. Assessment of mechanical reliability of planar SOFCs in view of selection of materials and operating conditions. In: McEvoy, A.J. (ed.) 4th European Solid Oxide Fuel Cell Forum, 10-14 July 2000, Luzern, Schweiz) ist bekannt, daß einem sich verengenden Zuführungskanal das Betriebsmittel über einen senkrecht auf den Zuführungskanal stoßenden Versorgungskanal zugeleitet wird. Der Querschnitt des Zuführungskanals nimmt dabei über den Strömungsweg des Betriebsmittels entlang der Eintrittsseite einer Brennstoffzelle ab. Der Zuführungskanal grenzt an die Eintrittsseite der Brennstoffzelle und führt das Betriebsmittel der Elektrode zu.

Auch aus US 2,934,322 A, EP-A-1 038 575 und EP-A-0 998 973 sind Vorrichtungen zur Verbesserung der Strömungsverteilung in Zuführungskanälen bekannt.

Nachteilig tritt im Stand der Technik regelmäßig eine Ungleichverteilung des Betriebsmittels innerhalb der Brennstoffzellen auf. Dadurch entstehen Einbußen im Wirkungsgrad.

Die Ungleichverteilung von Betriebsmitteln ist darüber hinaus für eine Vielzahl weiterer Reaktoren, insbesondere solchen mit Strukturen im Submikrometerbereich nachteilig. Genannt seien beispielhaft die Wärmetauscher und Reaktoren der autothermen Reformierung (ATR). Dabei ist aufgrund der geringen Toleranz der Polymer-Elektrolyt-Brennstoffzelle (PEFC) gegenüber Kohlenmonoxid eine sich der Reformierung anschließende weitere Abreicherung dieser Komponente aus dem entstandenen Synthesegas erforderlich. Diese CO-Konvertierung zum für die Brennstoffzelle ungefährlichen Kohlendioxid erfolgt in der Regel in einem ersten Schritt mit Wasser durch die sogenannte Shift-Reaktion und, da diese aufgrund einer thermodynamischen Gleichgewichtslimitierung den zur Zeit geforderten CO-Grenzwert von 10 ppm nicht erreichen kann, in einem zweiten Schritt durch die Oxidation mit Sauerstoff/Luft in der sogenannten präferentiellen Oxidation. Beide Reaktionen werden katalytisch durchgeführt und verlaufen exotherm. Bei der Shift-Reaktion führt die aus der Exothermie der Reaktion erfolgende Erwärmung des Gases zu einer ungünstigen Verschiebung des thermodynamischen Gleichgewichtes auf die Seite der Edukte. Bei der präferentiellen Oxidation führt eine Erwärmung des Gases zu einer verstärkten parallel zur CO-Oxidation ablaufenden H₂-Oxidation, da die heutzutage verwendeten Oxidationskatalysatoren, in der Regel Platin-basiert, für beide Reaktionen katalytisch aktiv sind. Bei beiden Reaktionen ist somit eine gezielte Temperaturabführung wünschenswert, die vorteilhaft in Mikrokanälen durchgeführt werden kann, da diese gute Wärmeübertragungseigenschaften aufweisen. Die Realisierung einer gleichmäßigen Durchströmung beim Übergang von den Zuleitungen im Makromaßstab auf eine Vielzahl parallel geschalteter Mikrokanäle stellt dabei ein bekanntes Problem dar (Walter, S., Frischmann, G., Broucek, R., Bergfeld, M., Liauw, M. (1999). Fluiddynamische Aspekte in Mikrostrukturreaktoren, Chemie Ingenieur Technik, 71, 447-455), so daß geeignete Reaktoren entwickelt werden müssen.

Aufgabe der Erfindung ist es daher, einen Reaktor bereit zu stellen, in dem eine gleichmäßige Verteilung eines Betriebsmittels gewährleistet wird.
Aufgabe ist es weiterhin, ein Verfahren zum Betreiben eines Reaktors bereit zu stellen, mit dem eine gleichmäßige Verteilung eines Betriebsmittels in dem Reaktor erzielt wird.

Die Aufgabe wird gelöst durch einen Reaktor gemäß Hauptanspruch sowie durch ein Verfahren gemäß Nebenanspruch. Vorteilhafte Ausführungsformen ergeben sich aus den jeweils darauf rückbezogenen Ansprüchen.

Der Reaktor weist einen Zuführungskanal für ein Betriebsmittel auf, dessen Querschnitt über seine Länge abnimmt. Er weist weiterhin einen in den Zuführungskanal führenden Zulauf eines Versorgungskanals auf. Der Zulauf und die Eintrittsseite (a-a') des Reaktors für das Betriebsmittel schließen einen Winkel α von 20 bis 70 Grad ein.

Der abnehmende Querschnitt eines solchen Zuführungskanals gewährleistet, daß der Strömungsdruck des Betriebsmittels nach Eintritt in den Zuführungskanal über die gesamte, an den Zuführungskanal angrenzende, Eintrittsseite des Reaktors aufrecht erhalten bleibt. Dadurch wird der nachlassende Strömungsdruck, der auf Grund von in den Reaktor entweichenden Massenströmen auftritt, ausgeglichen. Das Betriebsmittel wird somit gleichmäßig über die gesamte Länge dieser Eintrittsseite des Reaktors verteilt. Die Schräge des Zulaufs zur Eintrittsseite des Reaktors bewirkt vorteilhaft, daß das Betriebsmittel auch innerhalb eines möglicherweise vorhandenen Elektrodenraumes, beispielsweise von Brennstoffzellen, gleichmäßig verteilt wird. Der Winkel der Schräge variiert, in Abhängigkeit vom Design des Reaktors, von 20 bis 70 Grad.

Der Winkel zwischen Zuführungskanal und Eintrittsseite, im weiteren als Winkel β bezeichnet, beträgt vorteilhaft zwischen 2 und 5 Grad.

In einer weiteren Ausgestaltung der Erfindung schließen der Zulauf und die Eintrittsseite des Reaktors einen Winkel α von 45 Grad ein.
Dadurch wird eine besonders gleichmäßige Verteilung des Betriebsmittels in den Reaktor erzielt.

In einer weiteren Ausgestaltung der Erfindung nimmt der Querschnitt des Zuführungskanals über seine Länge um 40-60 % ab.

Dies hat sich bezüglich der Aufrechterhaltung des Strömungsdruckes entlang der Eintrittsseite des Reaktors als besonders vorteilhaft herausgestellt.
Die Kombination aus einem schräg zur Eintrittsseite des Reaktors zulaufenden Versorgungskanal und abnehmenden Querschnitt des Zuführungskanals gewährleistet, daß entlang des Zuführungskanals bzw. entlang der Eintrittsseite des Reaktors das Betriebsmittel gleichmäßig verteilt wird. Weiterhin durchströmt das Betriebsmittel nach Eintritt in einen Elektrodenraum diesen gleichmäßig. Das abgereicherte Betriebsmittel verläßt als Reaktionsprodukt an einer als Austrittsseite bezeichneten Seite den Reaktor.

An der Austrittsseite des Reaktors ist, in Analogie des Zuführungskanals an der Eintrittsseite, ein entsprechender Abführungskanal für ein Reaktionsprodukt vorgesehen. Der Querschnitt des Abführungskanals nimmt dann entsprechend über seine Länge zu.
Besonders vorteilhaft nimmt der Querschnitt des Abführungskanals über seine Länge um 40-60 % zu.
Dadurch wird gewährleistet, daß der Strömungsdruck auch an der Austrittsseite des Reaktors konstant ist.

Über den Abführungskanal wird das Reaktionsprodukt dem Ablauf eines Entsorgungskanals zugeführt, wobei der Ablauf und die Austrittsseite des Reaktors einen Winkel α' von 20 bis 70 und insbesondere 45 Grad einschließen.

Der Querschnitt des Abführungskanals für das Reaktionsprodukt nimmt dann über den Strömungsweg des Reaktionsproduktes bis hin zu einem Ablauf eines Entsorgungskanals zu. Durch die Schräge des Ablaufs wird das Reaktionsprodukt besonders effizient aus dem Reaktor herausgeführt. Der Winkel β' zwischen Abführungskanal und Austrittsseite des Reaktors beträgt vorteilhaft zwischen 2 und 5 Grad.

Das Verfahren zur gleichmäßigen Verteilung eines Betriebsmittels in einem erfindungsmässen Reaktor sieht die folgenden Schritte vor:
- ein Betriebsmittel wird in einem Winkel α von 20-70 Grad an die Eintrittsseite eines Reaktors herangeführt,
- das Betriebsmittel wird anschließend in einen sich bezüglich seines Querschnitts abnehmenden Zuführungskanal eingeleitet,
- das Betriebsmittel verteilt sich nach Eintritt gleichmäßig in dem Reaktor,
- das Betriebsmittel durchströmt den Reaktor an allen Punkten mit nahezu gleicher Geschwindigkeit.

Speziell in dem Fall, daß das Betriebsmittel in einem Winkel α von 45 Grad an die Eintrittsseite herangeführt wird, durchströmt das Betriebsmittel nahezu gleichmäßig den Reaktor. Somit liegt während des Betriebes jeweils eine annähernd gleiche Menge (Volumen / Masse) des Betriebsmittels an allen Punkten innerhalb des Reaktors bzw. im Elektrodenraum des Reaktors vor. Es tritt eine Erhöhung des Wirkungsgrades auf Grund einer gleichmäßigen Verteilung auf.

Gemäß Anspruch 8 ist unter einem Reaktor insbesondere auch eine Brennstoffzelle zu verstehen.

Die Brennstoffzelle weist einen Zuführungskanal für ein Betriebsmittel auf, dessen Querschnitt über seine Länge abnimmt. Sie weist weiterhin einen in den Zuführungskanal führenden Zulauf eines Versorgungskanals auf. Der Zulauf und die Eintrittsseite der Brennstoffzelle für das Betriebsmittel schließen einen Winkel α von 20 bis 70 Grad ein.

Der abnehmende Querschnitt eines solchen Zuführungskanals gewährleistet, daß der Strömungsdruck des Betriebsmittels nach Eintritt in den Zuführungskanal über die gesamte, an den Zuführungskanal angrenzende, Eintrittsseite der Brennstoffzelle aufrecht erhalten bleibt. Dadurch wird der nachlassende Strömungsdruck, der auf Grund von in die Brennstoffzelle entweichenden Massenströmen auftritt, ausgeglichen. Das Betriebsmittel wird somit gleichmäßig über die gesamte Länge dieser Eintrittsseite der Brennstoffzelle verteilt. Die Schräge des Zulaufs zur Eintrittsseite der Brennstoffzelle bewirkt vorteilhaft, daß das Betriebsmittel auch innerhalb des Elektrodenraumes gleichmäßig verteilt wird. Der Winkel der Schräge variiert, in Abhängigkeit vom Design der Brennstoffzelle, von 20 bis 70 Grad.

Der Winkel zwischen Zuführungskanal und Eintrittsseite, im weiteren als Winkel β bezeichnet, beträgt vorteilhaft zwischen 2 und 5 Grad.

In einer weiteren Ausgestaltung der Erfindung schließen der Zulauf und die Eintrittsseite der Brennstoffzelle einen Winkel α von 45 Grad ein.
Dadurch wird eine besonders gleichmäßige Verteilung des Betriebsmittels in der Brennstoffzelle erzielt.

In einer weiteren Ausgestaltung der Erfindung nimmt der Querschnitt des Zuführungskanals über seine Länge um 40-60 % ab.
Dies hat sich bezüglich der Aufrechterhaltung des Strömungsdruckes entlang der Eintrittsseite der Brennstoffzelle als besonders vorteilhaft herausgestellt.
Die Kombination aus einem schräg zur Eintrittsseite der Brennstoffzelle zulaufenden Versorgungskanal und abnehmenden Querschnitt des Zuführungskanals gewährleistet, daß entlang des Zuführungskanals bzw. entlang der Eintrittsseite der Brennstoffzelle das Betriebsmittel gleichmäßig verteilt wird. Weiterhin durchströmt das Betriebsmittel nach Eintritt in den Elektrodenraum diesen gleichmäßig. Das abgereicherte Betriebsmittel verläßt als Reaktionsprodukt an einer als Austrittsseite bezeichneten Seite die Brennstoffzelle.

An der Austrittsseite der Brennstoffzelle ist, in Analogie des Zuführungskanals an der Eintrittsseite, ein entsprechender Abführungskanal für ein Reaktionsprodukt vorgesehen. Der Querschnitt des Abführungskanals nimmt dann entsprechend über seine Länge zu.

Besonders vorteilhaft nimmt der Querschnitt des Abführungskanals über seine Länge um 40-60 % zu.
Dadurch wird gewährleistet, daß der Strömungsdruck auch an der Austrittsseite der Brennstoffzelle konstant ist.

Über den Abführungskanal wird das Reaktionsprodukt dem Ablauf eines Entsorgungskanals zugeführt, wobei der Ablauf und die Austrittsseite der Brennstoffzelle einen Winkel α' von 20 bis 70 und insbesondere 45 Grad einschließen.
Der Querschnitt des Abführungskanals für das Reaktionsprodukt nimmt dann über den Strömungsweg des Reaktionsproduktes bis hin zu einem Ablauf eines Entsorgungskanals zu. Durch die Schräge des Ablaufs wird das Reaktionsprodukt besonders effizient aus der Brennstoffzelle herausgeführt. Der Winkel β' zwischen Abführungskanal und Austrittsseite der Brennstoffzelle beträgt vorteilhaft zwischen 2 und 5 Grad.

Das Verfahren zur gleichmäßigen Verteilung eines Betriebsmittels in einer erfindungsmässen Brennstoffzelle sieht die folgenden Schritte vor:
- ein Betriebsmittel wird in einem Winkel α von 20-70 Grad an die Eintrittsseite einer Brennstoffzelle herangeführt,
- das Betriebsmittel wird anschließend in einen sich bezüglich seines Querschnitts abnehmenden Zuführungskanal eingeleitet,
- das Betriebsmittel verteilt sich nach Eintritt gleichmäßig in der Brennstoffzelle,
- das Betriebsmittel durchströmt die Brennstoffzelle an allen Punkten mit nahezu gleicher Geschwindigkeit.

Speziell in dem Fall, daß das Betriebsmittel in einem Winkel α von 45 Grad an die Eintrittsseite herangeführt wird, durchströmt das Betriebsmittel nahezu gleichmäßig die Brennstoffzelle. Somit liegt während des Betriebes jeweils eine annähernd gleiche Menge (Volumen / Masse) des Betriebsmittels an allen Punkten innerhalb des Elektrodenraumes vor. Es tritt eine Erhöhung des Wirkungsgrades auf Grund einer gleichmäßigen Verteilung auf.

Im Folgenden wird die Erfindung an Hand einiger Ausführungsbeispiele näher erläutert.

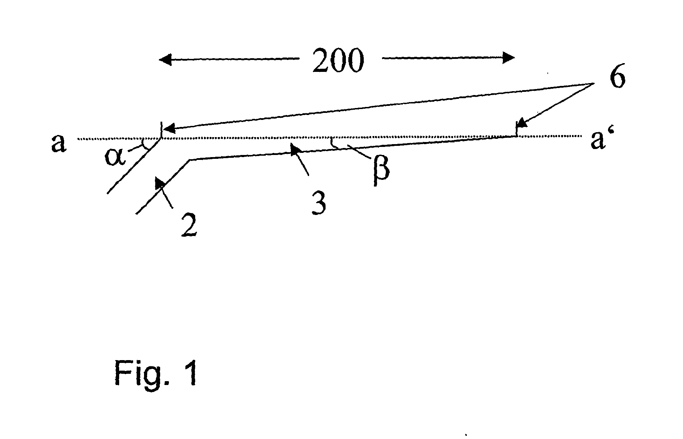

Fig. 1 zeigt die Eintrittsseite eines erfindungsgemäßen Reaktors, insbesondere einer Brennstoffzelle. Der Winkel α zwischen Zulauf 2 und der Eintrittsseite des Reaktors beträgt 45 Grad. Die Eintrittsseite verläuft entlang der Achse a-a'. Die Eintrittsseite befindet sich zwischen den beiden senkrechten Linien 6. Die Linien 6 deuten den weiteren Verlauf des Reaktors in vertikaler Richtung an.
Elektroden oder auch Gasverteilerstrukturen sind nicht dargestellt. Der Zulauf 2 führt in den bezüglich des Querschnitts kleineren Zuführungskanal 3. Der Querschnitt des Zuführungskanals 3 nimmt über seine Länge von 8 mm² auf 3 mm² ab. Der Querschnitt des Zulaufs 2 beträgt 12 mm². Zuführungskanal 3 und die Eintrittsseite des Reaktors bzw. der Brennstoffzelle schließen einen Winkel β von 2 Grad ein. Die Länge der Eintrittsseite beträgt 200 mm.

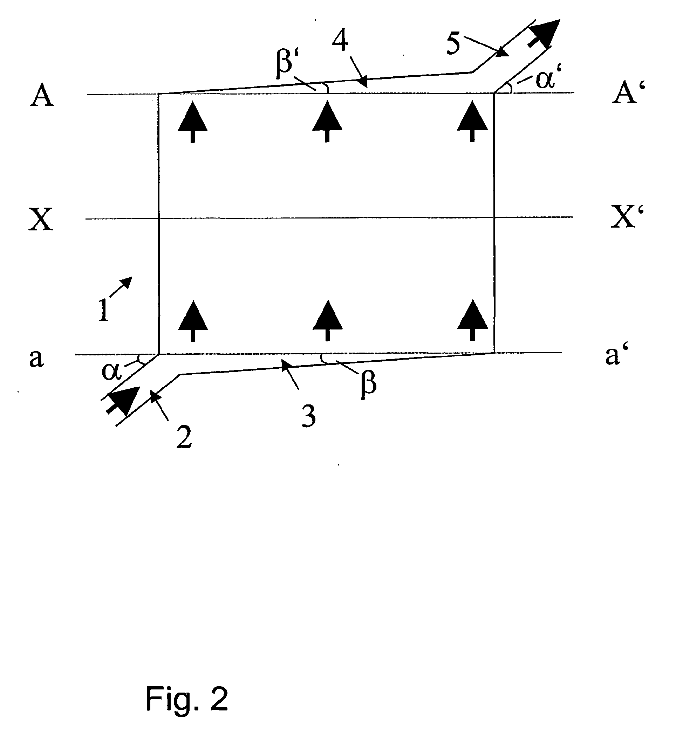

Fig. 2 zeigt einen erfindungsgemäßen Reaktor 1, insbesondere eine Brennstoffzelle. Es bedeuten:
- α:: Winkel zwischen Zulauf 2 und Eintrittsseite entlang der Achse a-a'
- α':: Winkel zwischen Ablauf 5 und Austrittsseite entlang der Achse A-A'
- β:: Winkel zwischen Zuführungskanal 3 und Eintrittssei- te entlang der Achse a-a' .
- β':: Winkel zwischen Abführungskanal 4 und Austrittssei- te entlang der Achse A-A'

Die Strömungsrichtung des Betriebsmittels ist durch die dick markierten Pfeile gekennzeichnet. Der Zulauf 2 wird aus einem Versorgungskanal mit Betriebsmittel versorgt, der Ablauf 5 führt das Reaktionsprodukt in den Entsorgungskanal. Versorgungskanal und Entsorgungskanal sind nicht dargestellt. Das Betriebsmittel gelangt über den Zulauf 2 in den Zuführungskanal 3. Der Winkel α zwischen Zulauf und der Eintrittsseite entlang der Achse a-a' beträgt 40 Grad, der Winkel β zwischen Zuführungskanal 3 und der Eintrittsseite beträgt 2 Grad. Das Betriebsmittel gelangt in den Reaktor bzw. in die Brennstoffzelle und durchströmt diesen bzw. diese. Das Betriebsmittel verläßt den Reaktor bzw. die Brennstoffzelle nach der elektrochemischen Reaktion über den Abführungskanal 4 und den Ablauf 5. Der Winkel α' zwischen Ablauf 5 und der Austrittsseite entlang der Achse A-A' beträgt 40 Grad. Der Winkel β' zwischen Abführungskanal 4 und der Austrittsseite entlang der Achse A-A' beträgt 2 Grad.
Die in den Figuren 1 und 2 beschriebenen Geometrien für die Eintrittsseite und die Austrittsseite sind, wie erwähnt, insbesondere auch für Brennstoffzellen als Reaktoren geeignet. Um mehrere Betriebsmittel auf diese Weise gleichmäßig den Elektroden der Brennstoffzelle zuzuführen, zu verteilen und wieder abzuführen, kann die Brennstoffzelle derart gestaltet sein, daß das Oxidationsmittel und das Reduktionsmittel beispielsweise im Kreuzstrom- oder auch im Gegenstromverfahren an die Elektroden geführt werden.

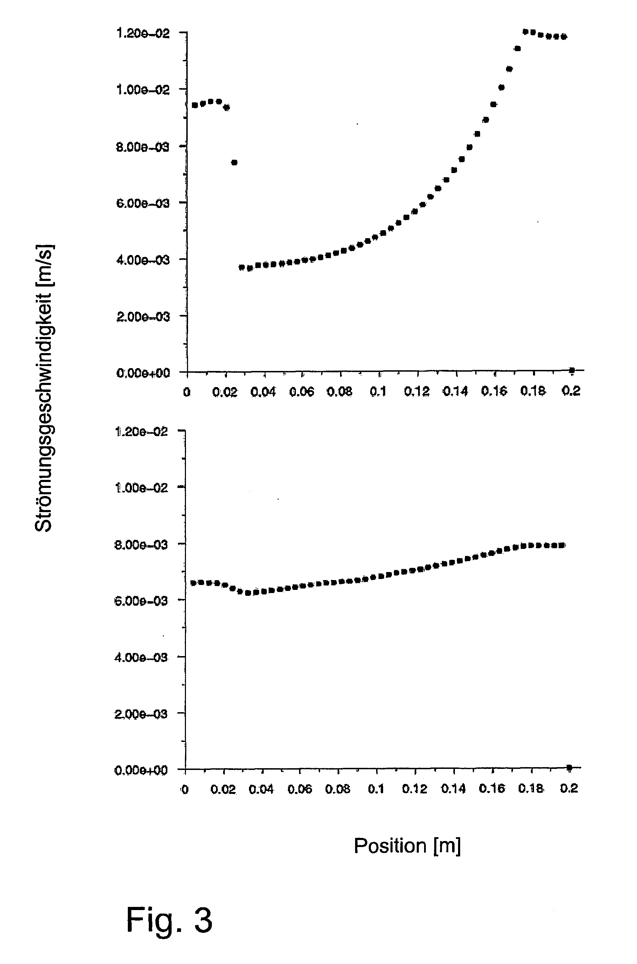

Fig. 3 zeigt die Strömungsgeschwindigkeit eines Betriebsmittels in Abhängigkeit von der Position innerhalb einer 200 mm breiten und 300 mm langen Brennstoffzelle. Die Strömungsgeschwindigkeit innerhalb der Brennstoffzelle wurde in der Mitte der Brennstoffzelle bei einer Länge von 150 mm entlang der Achse X-X' entsprechend der Fig. 2 gemessen. Im oberen Teil der Fig. 3 ist die Strömungsgeschwindigkeit eines Betriebsmittels in einer konventionellen Brennstoffzelle gemessen. Der Winkel α zwischen Zulauf und der Eintrittsseite entlang einer Achse a-a' entsprechend der Fig. 2 beträgt 90 Grad. Der Winkel α' zwischen Ablauf und Austrittsseite entlang einer Achse A-A' entsprechend der Fig. 2 beträgt ebenfalls 90 Grad. Innerhalb der Brennstoffzelle tritt eine ungleichmäßige Strömungsgeschwindigkeit und damit eine ungleichmäßige Verteilung des Betriebsmittels entlang der Achse X-X' auf.

In einer Ausgestaltung der anspruchsgemäßen Brennstoffzelle mit Winkeln von jeweils 45 Grad zwischen Zulauf und Eintrittsseite sowie Ablauf und Austrittsseite tritt, wie im unteren Teil der Fig. 3 dargestellt, eine gleichmäßige Strömungsgeschwindigkeit und damit eine Gleichverteilung des Betriebsmittels innerhalb der Brennstoffzelle entlang der Achse X-X' auf. Die Strömungsgeschwindigkeit und damit die Verteilung des Betriebsmittels ist innerhalb der Brennstoffzelle an allen Punkten der Achse X-X' nahezu identisch. Der Variationskoeffizient hierzu beträgt nur ca. 5 %.

Die in den Figuren dargestellten Geometrien und Ergebnisse sind auf weitere Reaktortypen übertragbar, bei denen eine gleichmäßige Verteilung von Betriebsmitteln im Reaktor erwünscht ist. Weitere bevorzugte Anwendungen sind z.B. die in Brenngaserzeugungssystemen für den mobilen Einsatz der Brennstoffzelle enthaltenen Wärmetauscher und Mikroreaktoren. Durch die beschriebenen Geometrien werden die Strömungsverhältnisse von Betriebsmitteln günstig beeinflußt, so daß von einem Strömungsquerschnitt einer technisch gängigen Größenordnung auch auf eine Vielzahl von Strömungsquerschnitten im Submillimeterbereich (Mikroreaktor) übergegangen werden kann. Es werden dann alle Bereiche innerhalb des Wärmetauschers bzw. Mikroreaktors mit Reaktionsgemisch gleichmäßig beaufschlagt und durchströmt. Vorhandener Katalysator wird vollständig genutzt. Dadurch wird Katalysator eingespart. Eine Reduktion an Katalysator ist für den Einsatz in einem Massenprodukt wie z.B. dem Automobil wünschenswert, da bereits aus einer kleinen pro Aggregat eingesparten Menge an Katalysator aufgrund der hohen Stückzahlen eine große Gesamtersparnis an Kosten resultiert.

Weiterhin bildet sich senkrecht zur Strömungsrichtung des Betriebsmittels ein gleichmäßiges Temperaturprofil aus, da die durchgesetzten Massenströme in allen Bereichen des Wärmetauschers bzw. Mikroreaktors annähernd konstant sind. Durch das gleichmäßige Temperaturprofil senkrecht zur Strömungsrichtung wird vermieden, daß Wärme in relevanten Größenordnungen in dieser Richtung übertragen wird.

In Wärmetauschern bzw. Mikroreaktoren können zur Verteilung der Betriebsmittel bipolare Platten eingesetzt werden. Unter der Annahme, daß eine gleichmäßige Beschichtung aller Kanäle einer bipolaren Platte mit Katalysator bei heterogen- katalysierten Reaktionen vorliegt, werden in allen Kanälen ähnliche Umsätze erzielt werden. Wenn ein Reaktionsgemisch gekühlt bzw. beheizt wird, werden ähnliche Reaktionsgeschwindigkeiten in einer Ebene senkrecht zur Strömungsrichtung und damit eine homogene Produktgasqualität erzielt.

Aus der verbesserten Katalysatorausnutzung resuliert auch ein geringeres Bauvolumen. Dies bewirkt neben einer Volumenreduktion eine Verringerung der thermischen Masse der Reaktoren. Auf Grund kleinerer Baugrößen nehmen die Kosten des Wärmetauschers bzw. Mikroreaktors ab. Eine Abnahme der Herstellungskosten eines on-board Brenngaserzeugungssystems ist wegen des hohen Anteils an den Gesamtkosten eines Fahrzeugs mit Brennstoffzellenantrieb besonders vorteilhaft.

## Patentansprüche

1. Reaktor (1) mit einer Eintrittsseite für ein Betriebsmittel, wobei an der Eintrittsseite ein Zuführungskanal (3) angeordnet ist, derartig, dass die Eintrittsseite an der Grenze zwischen Reaktor (1) und Zuführungskanal (3) angeordnet ist und eine Achse a-a' definiert, der Zuführungskanal (3) sich entlang der Eintrittsseite des Reaktors (1) für das Betriebsmittel erstreckt und in Bezug auf den Querschnitt über seine Länge hinweg abnimmt, und in den Zuführungskanal (3) ein Zulauf (2) eines Versorgungskanals führt,
**dadurch gekennzeichnet, dass**
der Zulauf (2) mit der Eintrittsseite des Reaktors (1) einen Winkel α von 20 bis 70 Grad bildet.

2. Reaktor nach vorhergehendem Anspruch,
**dadurch gekennzeichnet,**
**daß** der Zulauf (2) und die Eintrittsseite des Reaktors einen Winkel α von 45 Grad einschließen.

3. Reaktor nach einem der vorhergehenden Ansprüche,
**dadurch gekennzeichnet,**
**daß** der Querschnitt des Zuführungskanals (3) über seine Länge um 40-60 % abnimmt.

4. Reaktor nach einem der vorhergehenden Ansprüche,
**dadurch gekennzeichnet,**
**daß** der Querschnitt eines Abführungskanals (4) für ein Reaktionsprodukt über seine Länge zunimmt.

5. Reaktor nach vorhergehendem Anspruch,
**dadurch gekennzeichnet,**
**daß** der Querschnitt des Abführungskanals (4) über seine Länge um 40-60 % zunimmt.

6. Reaktor nach einem der vorhergehenden Ansprüche, **dadurch gekennzeichnet,**
**daß** ein Ablauf (5) eines Entsorgungskanals und die Austrittsseite des Reaktors, welche eine Achse A-A' definiert, einen Winkel α' von 20 bis 70 Grad einschließen.

7. Reaktor nach vorhergehendem Anspruch,
**dadurch gekennzeichnet,**
**daß** der Ablauf (5) des Entsorgungskanals und die Austrittsseite des Reaktors einen Winkel α' von 45 Grad einschließen.

8. Brennstoffzelle als Reaktor nach einem der Ansprüche 1 bis 7.

9. Wärmetauscher oder Mikroreaktor als Reaktor nach einem der Ansprüche 1 bis 7.

10. Verfahren zur Verteilung eines Betriebsmittels in einen Reaktor nach einem der vorherigen Ansprüche 1 bis 7 mit den Schritten,
- ein Betriebsmittel wird in einem Winkel von 20-70 Grad an die Eintrittsseite eines Reaktors herangeführt,
- das Betriebsmittel wird anschließend in einen sich bezüglich seines Querschnitts abnehmenden Zuführungskanal (3) eingeleitet,
- das Betriebsmittel verteilt sich gleichmäßig über die Eintrittsseite des Reaktors,
- das Betriebsmittel durchströmt den Reaktor an allen Punkten mit nahezu gleicher Geschwindigkeit.

11. Verfahren nach vorhergehendem Anspruch,
**dadurch gekennzeichnet,**
**daß** das Betriebsmittel in einem Winkel von 45 Grad an die Eintrittsseite des Reaktors heran geführt wird.

## Claims

1. Reactor (1) with an inlet side for an operating material, in which a feed channel (3) is arranged on the inlet side in such a way that the inlet side is arranged on the border between the reactor (1) and the feed channel (3) and defines an axis a-a', the feed channel (3) extends long the inlet side of the reactor (1) for the operating material and decreases with reference to the cross section over its length and an intake (2) of a supply channel leads into the feed channel (3),
**characterised in that**
the intake (2) forms an angle α of 20 to 70 degrees with the inlet side of the reactor (1).

2. Reactor according to the previous claim,
**characterised in that**
the intake (2) and the inlet side of the reactor enclose an angle α of 45 degrees.

3. Reactor according to one of the previous claims,
**characterised in that**
the cross section of the feed channel (3) decreases by 40 - 60% over its length.

4. Reactor according to one of the previous claims,
**characterised in that**
the cross section of a removal channel (4) increases over its length for a reaction product.

5. Reactor according to the previous claim,
**characterised in that**
the cross section of the removal channel (4) increases by 40 - 60% over its length.

6. Reactor according to one of the previous claims,
**characterised in that**
an outlet (5) of a removal channel and the outlet side of the reactor, which defines an axis A-A', enclose an angle α' of 20 to 70 degrees.

7. Reactor according to the previous claim,
**characterised in that**
the outlet (5) of the removal channel and the outlet side of the reactor enclose an angle α' of 45 degrees.

8. Fuel cell as reactor according to one of claims 1 to 7.

9. Heat exchanger or micro reactor as reactor according to one of claims 1 to 7.

10. Method for distribution of an operating material in a reactor according to one of the previous claims 1 to 7 with the steps,
- an operating material is fed to the inlet side of a reactor at an angle of 20 - 70 degrees,
- the operating material is then introduced into a feed channel (3) decreasing with reference to its cross section,
- the operating material is distributed uniformly over the inlet side of the reactor,
- the operating material flows through the reactor to all points with almost the same speed.

11. Method according to the previous claim,
**characterised in that**
the operating material is supplied to the inlet side of the reactor at an angle of 45 degrees.

## Revendications

1. Réacteur (1) avec un côté d'entrée pour un moyen de fonctionnement, un canal d'amenée (3) étant disposé sur le côté d'entrée de telle sorte que le côté d'entrée soit disposé à la limite entre le réacteur (1) et le canal d'amenée (3) et définisse un axe a-a' , que le canal d'amenée (3) s'étende le long du côté d'entrée du réacteur (1) pour le moyen de fonctionnement et se réduise en ce qui concerne la section transversale au-delà de sa longueur, et entraîne dans le canal d'amenée (3) une alimentation (2) d'un canal d'alimentation,
**caractérisé en ce**
**que** l'alimentation (2) forme avec le côté d'entrée du réacteur (1) un angle α compris entre 20 et 70 degrés.

2. Réacteur selon la revendication précédente,
**caractérisé en ce**
**que** l'alimentation (2) et le côté d'entrée du réacteur forment un angle α de 45 degrés.

3. Réacteur selon l'une quelconque des revendications précédentes,
**caractérisé en ce**
**que** la section transversale du canal d'amenée (3) se réduit sur sa longueur de 40 à 60 %.

4. Réacteur selon l'une quelconque des revendications précédentes,
**caractérisé en ce**
**que** la section transversale d'un canal d'évacuation (4) pour un produit de réaction augmente sur sa longueur.

5. Réacteur selon la revendication précédente,
**caractérisé en ce**
**que** la section transversale du canal d'évacuation (4) augmente sur sa longueur de 40 à 60 %.

6. Réacteur selon l'une quelconque des revendications précédentes,
**caractérisé en ce**
**qu'**un écoulement (5) du canal d'élimination et le côté de sortie du réacteur qui définit un axe A-A', forment un angle α' compris entre 20 et 70 degrés.

7. Réacteur selon la revendication précédente,
**caractérisé en ce**
**que** l'écoulement (5) du canal d'élimination et le côté de sortie du réacteur forment un angle α' de 45 degrés.

8. Pile à combustible servant de réacteur selon l'une quelconque des revendications 1 à 7.

9. Echangeur de chaleur ou microréacteur servant de réacteur selon l'une quelconque des revendications 1 à 7.

10. Procédé de répartition d'un moyen de fonctionnement dans un réacteur selon l'une quelconque des revendications précédentes 1 à 7 avec les étapes suivantes :
- un moyen de fonctionnement est amené dans un angle de 20 à 70 degrés près du côté d'entrée d'un réacteur,
- le moyen de fonctionnement est ensuite introduit dans un canal d'amenée (3) se réduisant par rapport à sa section transversale,
- le moyen de fonctionnement se répartit uniformément sur le côté d'entrée du réacteur,
- le moyen de fonctionnement traverse le réacteur en tout point à une vitesse presque identique.

11. Procédé selon la revendication précédente,
**caractérisé en ce**
**que** le moyen de fonctionnement est amené dans un angle de 45 degrés près du côté d'entrée du réacteur.
